# EUROPÄISCHE PATENTANMELDUNG

(11) **EP 2 782 141 A1**
(43) Veröffentlichungstag der Anmeldung: **24.09.2014**
(21) Anmeldenummer: 14160200.3
(22) Anmeldetag: 17.03.2014
(51) Int. Cl.: H01L 31/042

(54) **Mobiliar oder Gartenmöbel für den Aussenbereich mit integrierten Solarmodulen zur Elektrizitäts-Netzeinspeisung ohne Batterie**

(30) Priorität: 18.03.2013 CH 6212013
(71) Anmelder: Weingartner, Markus, 8172 Niederglatt (CH)
(72) Erfinder: Weingartner, Markus, 8172 Niederglatt (CH)
(74) Vertreter: Körner, Thomas Ottmar

(57) **Zusammenfassung**

Gartenmöbel und Mobiliar für den Aussenbereich wie Tische (Fig.1 Pos.1), Bänke, Liegestühle (Fig.1 Pos.2), Dekorartikel und Trennwände die solare Strahlung in Strom umwandeln und die elektrische Energie in das Wechselstrom Netz einspeisen und ohne Batterien auskommen.

Es werden Solarmodule in allen Varianten angeboten um Strom zu erzeugen. Diese werden normalerweise nur für die Stromerzeugung eingesetzt. Es gibt Solarmodule die zusätzlich noch einen zweiten Nutzen erfüllen z.B. als Ersatz für Ziegel und damit Regenschutz etc. aber nicht als Gartenmöbel. Durch diese Erfindung kann die Photovoltaik nicht nur auf Dächern, Fassaden, Balkonen und im Freiland sondern auch in Privat Gärten, im öffentlichen Raum, etc. genutzt werden. Dadurch dass diese Photovoltaik Gartenmöbel einen doppelten Nutzen haben sind Sie kostengünstig und brauchen keinen zusätzlichen Platz. Bis jetzt gab es schon Solartische, die haben aber nur eine Batterie aufgeladen.

Damit ist die Nutzung der Photovoltaik vor allem in urbanen Gebieten höher als vorher.

## Beschreibung

### Technisches Gebiet

Stromerzeugung durch Photovoltaik, Gartenmöbel/Mobiliar für Aussenbereich

### Stand der Technik

Es werden Solarmodule in allen Varianten angeboten um aus Sonnenstrahlung Strom zu erzeugen. Diese werden normalerweise nur für die Stromerzeugung gebaut und eingesetzt. Es gibt Solarmodule die zusätzlich noch einen zweiten Nutzen erfüllen z.B. als Ersatz für Ziegel und damit als Regenschutz, als Absturzsicherung bei Geländern, als Blendschutz, Schallschutz, als Fassadenverkleidung etc. aber nicht als Gartenmöbel/Mobiliar für den Aussenbereich das den erzeugten Strom ins Stromnetz einspeist. Photovoltaik die einen doppelten Nutzen hat, als Stromerzeuger und als Ersatz für ein Konstruktionselement wird auch BIPV genannt. (Building integrated photovoltaics, im Bauwerk integrierte Photovoltaik)

Es ist naheliegend dass Photovoltaik auf bestehenden Dächern eingesetzt wird, aber wenn diese schon genutzt werden oder die entsprechende Person kein Dach besitzt oder Nutzen darf, wird es schwieriger eine sinnvolle Art der Energieerzeugung mittels Photovoltaik zu finden. Zwar ist auch dies möglich, es können Solarmodule auf einem Befestigungssystem in den Garten gestellt oder an den Balkon gehängt werden, aber dies ist optisch nicht sehr ansprechend, es braucht zusätzlichen Platz und es kostet zusätzlich.
Mit Solarstrom Gartenmöbeln und anderem Solar Mobiliar im Aussenbereich werden zwei Ansprüche auf einmal befriedigt, z.B. durch das Anschaffen eines Solar Gartentisches kann man als Nebenprodukt noch ca. 25% seines Strombedarfs erzeugen. Des weiteren sind Gartenmöbel nicht Baubewilligungspflichtig und brauchen keinen Elektriker für die Installation, da man Sie direkt in die Steckdose einstecken kann, was es noch interessanter macht.
Die Solar Gartenmöbel sind ein ansprechendes Produkt das keinen zusätzlichen Platz braucht und sehr kostengünstig ist, da die meisten Teile einen zweiten Nutzen haben und damit auch sonst benötigt würden.

Es werden in diversen Patenten Sonnenstühle, Tische etc. beschrieben die Solarmodule eingebaut haben. (z.B. US2011/0193372 A1, JP2008017631, CN201775244U) Alle diese

Patente beschreiben aber Systeme die eine Batterie speisen und zum Laden von Telefonen, Laptops und ähnlichem verwendet werden. Teilweise ist auch ein Wechselrichter integriert der eine AC Spannung erzeugt, aber nicht ins Landesnetz einspeisen kann. Das Problem bei den bestehenden Lösungen ist, dass die erzeugte Energie, die benötigte Energie und der Ort der gespeicherten Energie in einem Missverhältnis stehen. Dies scheint der Grund zu sein dass sich keines dieser Systeme am Markt durchsetzen konnte. Das heisst, wenn es länger sonnig ist, ist der Gebrauch von Laptops nicht länger oder im Winter wenn es kaum Strahlung hat wird trotzdem telefoniert. Umgekehrt ist es sehr mühsam im Winter z.B. bei Niederschlag mit dem Laptop nach draussen zu gehen und den Laptop mehrstündig z.B. an einem Solartisch zu laden. Man könnte ein Kabel in ein Haus ziehen das den Tisch mit dem Haus verbindet aber auch dies macht im Kontext wenig Sinn da es dann keinen Tisch mehr braucht und man besser ein Solarmodul auf das Dach montiert.

Im Gegensatz dazu speisen die Gartenmöbel gemäss diesem Patent direkt ohne Batterie ins Netz ein. D.h. jegliche Energie wird vom Netz, das als unendlicher Speicher dient, jederzeit aufgenommen und die Energie kann auch jederzeit fast an jedem zivilisierten Ort der Erde wieder bezogen werden, was der Attraktivität von entsprechenden Solargartenmöbeln sehr zuträglich ist.

### Beschreibung

Durch diese Erfindung kann die Photovoltaik nicht nur auf Dächern, Fassaden, Balkonen und im Freiland sondern auch mit Gartenmöbeln wie Tischen, Sofas, Sitzbänken, Liegestühlen, Abtrennwänden, Blumentöpfen oder Blumentrögen etc. genutzt werden. Damit ist die Nutzung der Photovoltaik vor allem in urbanen Gebieten höher als vorher.
Zusätzlich werden folgende wichtige Aspekte die einer kommerziellen Nutzung entgegenkommen abgedeckt:
- Die Photovoltaik Gartenmöbel sind durch den Regen selbstreinigend
- Die energieerzeugenden Gartenmöbel sind kratzfest
- Einzelne Solarmodule können bei Beschädigung innerhalb kurzer Zeit ausgetauscht werden
- Beschattung beeinflusst die Stromproduktion der nicht beschatteten Photovoltaik Module nicht
- Beim Bruch eines PV Moduls besteht keine Verletzungsgefahr
- Die Solarmodule können in allen möglichen Varianten wie kristallin, dünschicht, aus Glas, Kunststoff etc. ausgeführt sein
- Die elektrischen Verbindungen erfolgen mit flexiblen Kabeln und wasserdichten Steckern
- Die Solarmodule können flexibel sein, d.h. die Möbel können auch runde Formen haben
- Die Solarmodule können beidseitig (Bifacial) Energie erzeugen, was z.B. bei Abtrennwänden interessant sein kann
- Die Solarmodule können teilweise transparent sein oder ganzflächig halbtransparent sein

### Aufzählung der Zeichnungen

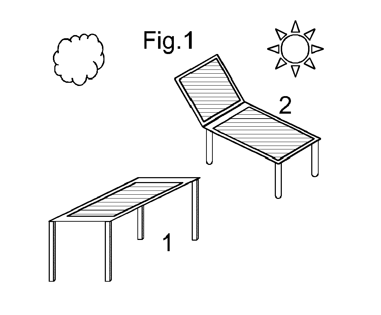

- Fig 1:: Übersicht der Anwendung bei Tischen und Liegestühlen
- Fig 2:: Detailansicht Solartisch
- Fig 3:: Detailansicht Solar Liegestuhl
- Fig 4:: Detailansicht Solar Blumentrog

### Ausführung der Erfindung

Es werden hier drei Ausführungsvarianten beschrieben, einmal als Photovoltaik Tisch (A) einmal als Photovoltaik Liegestuhl (B) und einmal als Photovoltaik Blumentrog (C).

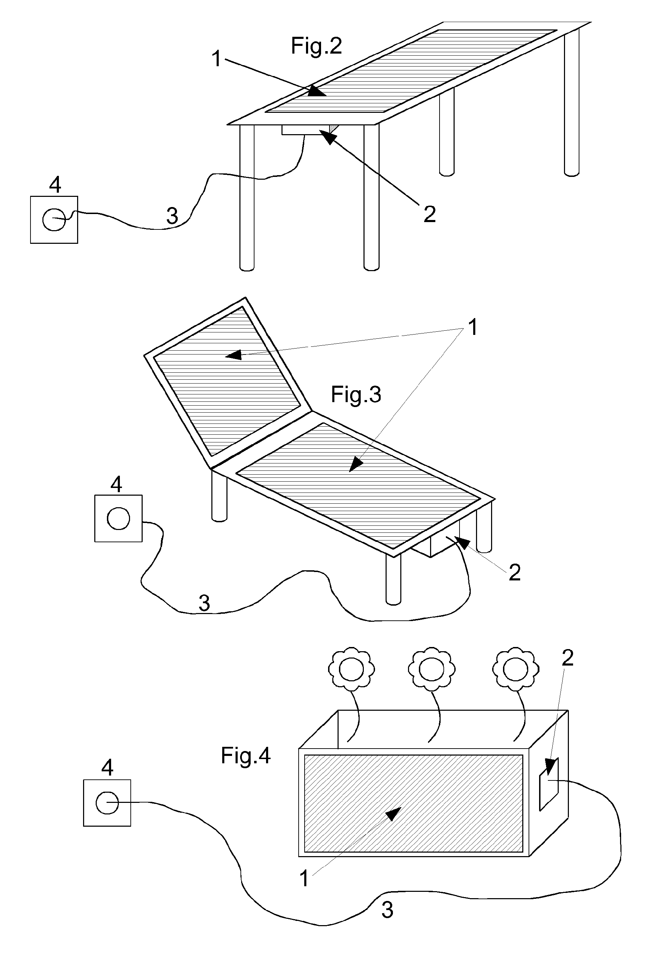

### Variante A Solartisch (Fig.2)

Der Tisch besteht aus einer Tischplatte mit integrierten Solarmodul 1, den Tischfüssen, dem Netzwechselrichter 2 und dem Kabel 3 das den Tisch mit dem Wechselstromnetz via Steckdose 4 verbindet. (Der Tisch kann auch direkt ohne Steckdose ans Netz angeschlossen werden)
Die oberste Schicht des Solarmoduls 1 besteht aus einer dünnen Schicht 0.2 mm spezial Glas das die entsprechende Kratzfestigkeit sicherstellt. Diese Schicht ist mit der unteren Schicht Glas durch Lamination fest verbunden.
Die zweite Schicht Glas besteht aus Einscheiben Sicherheitsglas (ESG) das 8mm dick ist und so die mechanische Festigkeit gewährt und bei Bruch wie bei einer Autoscheibe in kleine Stücke zerfällt und die Verletzungsgefahr bei einem Bruch auf ein Minimum beschränkt.
Jedes Modul enthält einen Modulwechselrichter 2 um sicherzustellen dass bei einer Verschattung eines oder mehrerer Module die nicht beschatteten Module trotzdem die volle Leistung ans Netz abgeben.

### Variante B Solar Liegestuhl (Fig.3)

Der Liegestuhl besteht aus einer Liegefläche mit integrierten Solarmodulen 1, den Liegestuhlfüssen, dem Netzwechselrichter 2 und dem Kabel 3 das den Liegestuhl mit dem Wechselstromnetz via Steckdose 4 verbindet. Jedes Modul enthält eine Modulwechselrichter 2 um sicherzustellen dass bei einer Verschattung eines oder mehrerer Module die nicht beschatteten Module trotzdem die volle Leistung ans Netz abgeben.

### Variante C Solar Blumentrog (Fig.4)

Der Photovoltaik Blumentrog besteht aus einer Wanne mit integriertem Solarmodul 1, dem Netzwechselrichter 2 und dem Kabel 3 das den Blumentrog mit dem Wechselstromnetz via Steckdose 4 verbindet.

## Patentansprüche

1. Gartenmöbel und anderes Mobiliar im Aussenbereich **dadurch gekennzeichnet dass** es solare Strahlung in Strom umwandelt und die erzeugte elektrische Energie in das Wechselstrom Netz einspeist und ohne Batterien auskommt.

2. Mobiliar im Aussenbereich gemäss Anspruch 1 **dadurch gekennzeichnet dass** diese Gartenmöbel, Tische, Stühle, Truhen, Boxen, Liegestühle, Liegen, Wippen, Sitzgruppen, Polstergruppen, Betten, Bänke, Schränke, Sofas, Dekorartikel, Sitzbänke, Abtrennwände etc. sein können.

3. Photovoltaik Gartenmöbel gemäss Anspruch 1/2 **dadurch gekennzeichnet dass** die Möbel mit allen Arten von Solarmodulen aus Glas, aus Kunststoff, mit kristallinen oder Dünnschicht Zellen, flexibel, durchsichtig, farbig, bifacial aktiv etc. ausgestattet sein können.

4. Mobiliar im Aussenbereich gemäss Anspruch 1 bis 3 **dadurch gekennzeichnet dass** dieses Mobiliar in Privat Gärten, im öffentlichen Raum, am Strand, in Sportstadien, Freizeitpärken, Badeanstalten, Gartenrestaurants, Sonnenterassen, Outdoor Kinos etc. genutzt werden können.

5. Mobiliar im Aussenbereich gemäss Anspruch 1 bis 4 **dadurch gekennzeichnet dass** dieses Mobiliar mit Solarmodulen versehen ist und zusätzlich zur normalen Nutzung so beschaffen ist, dass der Teil mit dem Solarmodul in Neigung und Azimut so verstellt werden kann dass zu jeder Tageszeit und/oder Jahreszeit ein optimaler Ertrag erzeugt werden kann. Neigung und Azimut kann auch motorisch nachgeführt sein.

6. Mobiliar im Aussenbereich gemäss Anspruch 1 bis 5 **dadurch gekennzeichnet dass** dieses Mobiliar aus allen möglichen Werkstoffen wie Holz, Kunststoff, Eisen, Aluminium, rostfreiem Stahl, Glas, Stein, Beton etc. bestehen kann.

7. Mobiliar im Aussenbereich gemäss Anspruch 1 bis 6 **dadurch gekennzeichnet dass** dieses Mobiliar eine kratzfeste Oberfläche hat. Dies kann z.B. durch Saphirglas, oder andere Produkten, Technologien und Verfahren erreicht werden.

8. Mobiliar im Aussenbereich gemäss Anspruch 1 bis 7 **dadurch gekennzeichnet dass** zwischen den Stromerzeugern (Photovoltaik) und dem Wechselstromnetz ein elektronischer Apparat montiert ist der den Gleichstrom in Wechselstrom umwandelt. Diese Umwandlung ist so gestaltet dass die Beschattung eines oder mehrerer Module die Energieerzeugung der anderen Module nicht verringert.

9. Photovoltaik Gartenmöbel gemäss Anspruch 1 bis 8 **dadurch gekennzeichnet dass** diese Materialien so konstruiert sind dass bei einer Überbelastung, d.h. z.B. beim Bruch keine Verletzungsgefahr besteht. Dies wird z.B. durch ein Einscheibensicherheitsglas (ESG) erreicht.

10. Photovoltaik Gartenmöbel gemäss Anspruch 1 bis 9 **dadurch gekennzeichnet dass** die Gartenmöbel mit flexiblen Kabeln und entsprechend wasserdichten Steckern elektrisch verdrahtet und mit dem Netz verbunden werden.
